# EUROPEAN PATENT APPLICATION

(11) **EP 1 198 049 A1**
(43) Date of publication of application: **17.04.2002**
(21) Application number: 00122142.3
(22) Date of filing: 12.10.2000
(51) Int. Cl.: H02J 7/00

(54) **Charging circuit for charging a mobile terminal through an USB interface**

(71) Applicant: Sony International (Europe) GmbH, 10785 Berlin (DE)
(72) Inventor: Tong, Zhao, c/o Digital Telecom. Europe, 85609 Aschheim (DE)
(74) Representative: Körber, Martin, Dipl.-Phys.

(57) **Abstract**

The present invention relates to a charging circuit (1) for charging a mobile terminal (2) of a wireless telecommunication system through a USB interface of a computer (3), with first connection means (4) for connection with the USB interface of a computer (3), second connection means (5) for connection with a mobile terminal (2) to be charged, and adaptation means (6; 7; 8) for adapting power received from the USB interface to the power requirements of a mobile terminal to be charged. The present invention further relates to a mobile terminal (2) adapted to be connected and charged by such a charging circuit (1). The present invention enables charging of a mobile terminal through a USB interface of a computer in a simple and flexible way.

## Description

The present invention relates to a charging circuit for charging a mobile terminal of a wireless telecommunication system through a USB interface of a computer and to a mobile terminal for a wireless telecommunication system adapted to be connected to and charged by such a charging circuit.

Charging circuits for charging batteries or accumulators of mobile terminals are known in the art. For example, US 5,870,615 discloses a specially designed PCMCIA card comprising a charging circuit for charging the battery of a cellular phone and an adapter cable having a battery characteristic encoder integrated at one end. However, a PCMCIA card can only be used with portable computers, such as laptops, notebooks or the like so that the proposed way of charging a mobile terminal is limited to these applications.

The object of the present invention is therefore to propose a charging circuit for charging a mobile terminal of a wireless telecommunication system and a mobile terminal adopted to be connected to and charged by such a charging circuit, which can be used with different kinds of computers in a simple and effective way.

The above object is achieved by a charging circuit for charging a mobile terminal of a wireless telecommunication system through a USB interface of a computer, with first connection means for a connection with the USB interface of a computer, second connection means for a connection with a mobile terminal to be charged, and adaptation means for adapting power received from said USB interface to the power requirements of a mobile terminal to be charged.

Most of the available computers, such as PCs, laptops, notebooks and the like, are equipped with a USB interface (universal serial bus interface) for connection with other devices. The USB interface is realised with a standardised USB port in the computers, to which a corresponding USB plug from a USB data cable is connected. The USB interface comprises four lines, namely two data lines, one power line and one ground line. The charging circuit according to the present invention therefore presents a very flexible and universally usable way of charging a mobile terminal of a wireless telecommunication system. Particularly, the charging circuit according to the present invention has the advantage that a mobile terminal for a wireless telecommunication system can be charged at any place of the world with only a single charging circuit. Normal charging cables for mobile terminals are only adapted to the specific power supply system used in the respective country. A USB interface, however, is an internationally used and standardised way of connecting devices to computers.

Advantageously, the adaptation means of the charging circuit according to the present invention comprises a current limiter to limit the current received from the USB interface to a maximum charging current of the mobile terminal. The current limiter is advantageous in respect of protection against TDMA bursts and other kinds of bursts used in the mobile terminal for the wireless transmission of data. Further advantageously, the adaptation means comprises a short circuit protection means for protecting the mobile terminal and/or the computer against short circuits. Further advantageously, the adaptation means comprises a voltage regulator for regulating the voltage received from the USB interface to the charging requirements of the mobile terminal. The voltage regulator is particularly advantageous for stabilising the voltage supplied to the mobile terminal.

It has to be understood, that in the present application, the expression charging a mobile terminal means charging of the battery or the accumulator of a mobile terminal.

Further advantageously, the first connection means is a USB cable for connection with a USB port of the computer and the second connection means is a mobile terminal cable for connection with a corresponding data input/output and charge port of the mobile terminal. Here, the charging circuit according to the present invention is an independent device with respective cables for the connection with the computer and the mobile terminal. Alternatively, the charging circuit according to the present invention can be built in the mobile terminal or the computer to that an integrated solution is realised. In further alternative solutions, the charging circuit according to the present invention could have a USB port as the first connection means and/or a respective mobile terminal cable port as the second connection means. Here, standardised cables and plugs could be used as the cable connections between the computer as a charging circuit and the charging circuit and the mobile terminal. A further advantage of this solution is that the charging circuit according to the present invention could be used with different kinds of mobile terminals having different kinds of data input/output and charge ports for the connection with the charging circuit.

Further, the charging circuit according to the present invention advantageously comprises a data line for transmitting power supply status information from the computer to the mobile terminal. The charging circuit according to the present invention as described above does not necessarily need to enable a data transfer between the computer and the mobile terminal and the conversion and adaptation of power received from the computer to the power requirements for charging the mobile terminal is generally sufficient for the purpose of the present invention. However, the communication of data between the computer and the mobile terminal is necessary for embodiments in which the charging of the mobile terminal is controlled in dependence of the status of the power supply of the computer.

The above object is further achieved by a mobile terminal for a wireless telecommunication system according to claim 8, which comprises a battery providing power supply, connection means adapted to be connected to a charging circuit of the above described kind, and control means for controlling the charging of the battery from a USB interface of a computer.

The battery of the mobile terminal according to the present invention which is to be charged by the charging circuit as above described, is for example part of a removable battery pack or accumulator of the mobile terminal. The connection means of the mobile terminal adapted to be connected to the inventive charging circuit is for example a data input/output and charge port of the mobile terminal, which serves also for other purposes, such as connecting a hands free kit or the like. The control means for controlling the charging of the battery is for example the central control microchip or microprocessor of the mobile terminal responsible for controlling the common functionalities. The wireless telecommunication system, in which the mobile terminal according to the present invention operates, can for example be the GSM and/or the UMTS and/or any other wireless telecommunication systsem.

Advantageously, the control means of the mobile terminal detects the charge level of the battery and controls the charging of the battery from a USB interface through a connected charging circuit on the basis of the detected charge level. Hereby, the control means advantageously charges the battery if the detected charge level is below a pre-set value. This value can for example be about 5% of the entire battery capacity. In this example of the mobile terminal according to the present invention, charging of the battery is performed only on the basis of the charge level of the battery and no further other information is used. Thus, the charging circuit can be reduced to the pure power conversion and adaptation function in order to deliver the specific voltage and current to the mobile terminal. The charging process is only controlled by the mobile terminal itself and not by the computer or the user. Alternatively, the charging circuit can, additionally to the power lines, comprise data lines for communicating data between the computer and the mobile terminal. In this way, the mobile terminal can be charged via the USB interface, while at the same time the data communication, for example for downloading or uploading data from and to the computer, can be performed.

In a further alternative example of the mobile terminal according to the present invention, the control means is adapted to receive a power supply status information of a computer through a connected charging circuit and controls the charging of the battery from a USB interface of the computer through the connected charging circuit on the basis of the received power supply status information. Here, charging of the battery of the mobile terminal is performed only if the received power supply status information indicates that the power supply status of the computer allows charging of the battery of the mobile terminal. Advantageously, the control means charges the battery if the received power supply status information indicates that the computer is connected to and powered by an external power supply. In this case, the battery of the mobile terminal is thus charged through the external power supply of the computer in any case in which the battery of the mobile terminal is not fully charged. Further advantageously, the control means is adapted to detect the charge level of the battery and charges the battery if the received power supply status information indicates that the computer is powered by an internal power supply and that the detected charge level is below a pre-set value. The pre-set value is advantageously about 5% of the entire battery capacity. Here, in order to save power for the computer, the battery is only charged if its charge level is so low that there is a risk that the mobile terminal cannot be further operated due to a lack of power. The last case is particularly applicable to mobile computers, such as laptops, notebooks and the like, which have an internal power supply in form of a detachable battery pack, an accumulator or the like. Here it is very important that the power resources of the computer as well as the mobile terminal are carefully controlled to ensure proper operation.

It is to be noted that in the example of the mobile terminal controlling the charging of its battery on the basis of a power supply status information received from the computer, the computer needs an appropriate driver software which detects the power status of the computer and transmits a corresponding information via the USB interface to the mobile terminal. Hereby, the data line of the charging circuit according to the present invention used for the transmission of the power supply status information between the computer and the mobile terminal can also be used for the communication of download/upload data and the like.

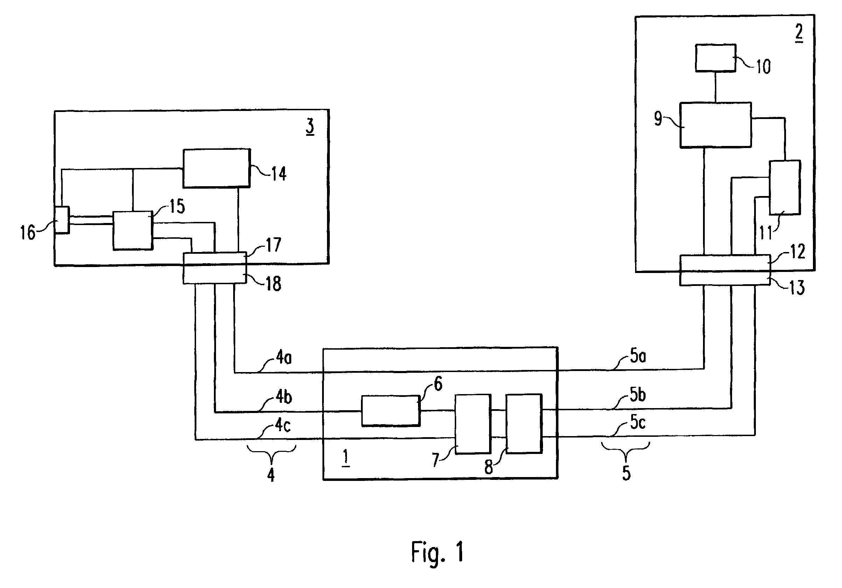

In the following description, the present invention is explained in more detail in relation to the enclosed only Figure 1, which shows a schematic block diagram of a charging circuit and a mobile terminal according to the present invention being connected to a computer.

Particularly, Fig. 1 shows a block diagram of a charging circuit 1 according to the present invention for charging a mobile terminal 2 of a wireless telecommunication system through a USB interface of a computer 3. Fig. 1 thereby shows an embodiment in which the charging circuit 1 comprises a connection cable 4 connected to the computer **3** and a connection cable **5** connected to the mobile terminal **2.** In another embodiment of the charging circuit **1** according to the present invention, the connection cables 4 and 5 can be separate devices to be detachably connected to the charging circuit 1.

The connection cable 5 connecting the charging circuit 1 and the computer 3 is a USB data cable (universal serial bus data cable), which comprises at least one data line 4a, one power line 4b and one ground line 4c. The power line 4b is considered for powering USB devices and delivers usually 5V ± 5% voltage and 500mA/100mA current so that the charging specifications of most mobile terminals for wireless telecommunication systems, such as the UMTS and/or the GSM system, are met.

The charging circuit 1 comprises adaptation means for adapting the power received from the USB interface of the computer 3 to the power requirements of the mobile terminal 2 to be charged. The adaptation means hereby comprise a current limiter 6 to limit the current in the power line 4b to the maximum charging current of the mobile terminal 2. The adaptation means further comprise a short circuit protection means 7 for protecting the mobile terminal 2 and/or the computer 3 against short circuits. The voltage received from the USB interface is regulated by a voltage regulator 8 to meet the charging requirements of the mobile terminal 2.

The connection cable 5 between the charging circuit 1 and the mobile terminal 2 comprises at least one data line 5a which is connected to the data line 4a of the connection cable 4 so that data are communicated between the computer 3 and the mobile terminal 2 via the data line 4a and the data line 5a. The connection cable 5 comprises a connector plug 13 for connection with a input/output and charge board 12 of the mobile terminal 2. Hereby, the power line 5b and the ground line 5c are connected to a battery 11 of the mobile terminal 2. The battery 11 can be an integral battery or a removable battery/accumulator. Further, the data line 5a is herewith connected to a control means 9 of the mobile terminal 2, which is connected to a memory means 10 for storing data and/or software application programs. The control means 9 controls the charging of the battery 11 from the USB interface of the computer 3 through the charging circuit 1.

The USB interface of the computer 3 is realised in a USB port 17, to which a USB plug 18 of the connection cable 4 of the charging circuit 1 is connected. Hereby, the power line 4b and the ground line 4c are connected to either an internal battery/accumulator 15 of the computer means 3 or to an external power supply socket 16, to which an external power source for the computer 3 can be connected. Thus, the battery 11 of the mobile terminal 2 is either charged from the internal battery/accumulator 15 of the computer 3 or an external power supply connected to the external power supply socket 16 of the computer 3.

The control means 9 of the mobile terminal 2 can control the charging process of the battery 11 in two ways. The first way is that the charging process is exclusively controlled by the control means 9, which, after detection that the mobile terminal 2 is connected to a USB interface of a computer 3 and that the battery level of the battery 11 is below a pre-set value starts to charge the battery 11. The charging circuit 1 will then deliver the specific voltage and current through the power lines 4b, 5b and the ground lines 4c, 5c to the battery 11. The current limiter and the voltage regulator are thereby set to the specific power requirements of the battery 11. In case that the charging circuit 1 is to be used with different kinds of mobile terminals 2, the necessary current and voltage values could for example be externally set by a user through a corresponding input means to the charging circuit 1. The power control software for controlling the charging of the battery is implemented in the memory 10 of the mobile terminal 2 and used by the control means 9 for detecting if the mobile terminal 2 is connected to an USB interface of a computer 3, to detect the charge level of the battery 11 and to control the charging process correspondingly. The pre-set value, from which charging of the battery 11 starts, can for example be 5% of the entire battery capacity. The control means 9 is for example a microchip or a microprocessor of the mobile terminal 2 which also controls other important functions of the mobile terminal.

In a second way of controlling the charging process of the battery 11 of the mobile terminal 2, the control means 9 receives a power supply status information of the computer 3 through the data lines 4a and 5a and controls the charging of the battery on the basis of the received power supply information. The power supply status information received from the computer 3 indicates if the computer 3 is connected to an internal battery/accumulator 15 or to an external power supply via the external power supply socket 16. The power supply status information is thereby detected in the computer 3 by a control means 14 and supplied via the data line 4a and the data line 5a to the control means 9 of the mobile terminal 2. In case that the received power supply status information indicates that the computer 3 is connected to an external power supply, the control means 9 charges the battery 11 independent of its charge level. If, on the other hand, the power control status information indicates that the computer 3 is only connected to and powered by an internal power supply, such as the battery/accumulator 15, the control means 9 detects the charge level of the battery 11 and only starts charging of the battery 11 via the charging circuit 1 if the charge level is below a pre-set value, as for example 5% of the entire battery capacity. Here, the control means 14 of the computer 3 may for example use the Microsoft Power Manager and a further special software application, as for example a USB data cable driver, to detect the power supply status of the computer 3 and supply a corresponding power status information to a connected mobile terminal 2. Each time a USB cable, as for example a connection cable 4 of the charging circuit 1 is connected to the USB port 17 of the computer 3, the USB data cable driver will start automatically and activate the Microsoft Power Manager to get the status of the power supply of the computer 3. After the USB cable is disconnected, the USB data cable driver will be automatically closed. Thus, no further special applications or software is needed on the computer 3 and the charging circuit 1 can be used as a so-called plug and play device. Further, the USB data cable driver only runs when a USB data cable is connected to the USB port 17, instead running the whole time in the background. Hereby, computer resources are saved. The USB data cable driver could also protect itself at questing and sending power supply information to a mobile terminal 2 by other drivers of other manufacturers.

The present invention is particularly advantageous, since the battery 11 of the mobile terminal 2 can be charged while the user works on the basis of the data connection between the mobile terminal 2 and the computer 3, for example while down- or uploading data or the like.

## Claims

**1.** Charging circuit (1) for charging a mobile terminal (2) of a wireless telecommunication system through a USB interface of a computer (3), with first connection means (4) for connection with the USB interface of a computer (3), second connection means (5) for connection with a mobile terminal (2) to be charged, and
adaptation means (6, 7, 8) for adapting power received from said USB interface to the power requirements of a mobile terminal to be charged.

**2.** Charging circuit (1) according to claim 1,
**characterized in,**
**that** said adaptation means comprises a current limiter (6) to limit the current received from the USB interface to a maximum charging current of the mobile terminal (2).

**3.** Charging circuit (1) according to claim 1 or 2,
**characterized in,**
**that** said adaptation means comprises a short circuit protection means (7) for protecting the mobile terminal (2) and/or the computer (3) against short circuits.

**4.** Charging circuit (1) according to claim 1, 2 or 3,
**characterized in,**
**that** said adaptation means comprises a voltage regulator (8) for regulating the voltage received from the USB interface to the charging requirements of the mobile terminal (2).

**5.** Charging circuit (1) according to one of the claims 1 to 4,
**characterized in,**
**that** said first connection means (4) is a USB cable for connection with a USB port (17) of the computer and said second connection means (5) is a mobile terminal cable for connection with a corresponding data input/output and charge port (12) of the mobile terminal (2).

**6.** Charging circuit (1) according to one of the claims 1 to 5,
**characterized by**
a data line (4a, 5a) for transmitting power supply status information from the computer (3) to the mobile terminal (2).

**8.** Mobile terminal (2) for a wireless telecommunication system, comprising
a battery (11) providing power supply,
connection means (12) adapted to be connected to a charging circuit (1) according to one of the claims 1 to 6, and
control means (9) for controlling the charging of the battery (11) from a USB interface of a computer (3).

**9.** Mobile terminal (2) according to claim 8,
**characterized in,**
**that** the control means (9) detects the charge level of the battery (11) and controls the charging of the battery (11) from a USB interface through a connected charging circuit (1) on the basis of the detected charge level.

**10.** Mobile terminal (2) according to claim 9,
**characterized in,**
**that** the control means (9) charges said battery (11) if the detected charge level is below a preset value.

**11.** Mobile terminal (2) according to claim 10,
**characterized in,**
**that** the control means (9) charges said battery if the detected charge level is below about 5% of the entire battery capacity.

**12.** Mobile terminal (2) according to claim 8,
**characterized in,**
**that** the control means (9) is adapted to receive a power supply status information of a computer (3) through a connected charging circuit (1) and controls the charging of the battery from a USB interface of the computer (3) through the connected charging circuit (1) on the basis of the received power supply status information.

**13.** Mobile terminal (2) according to claim 12,
**characterized in,**
**that** the control means (9) charges said battery if the received power supply status information indicates that the computer (3) is connected to an external power supply.

**14.** Mobile terminal (2) according to claim 12 or 13,
**characterized in,**
**that** the control means (9) is adapted to detect the charge level of said battery and charges said battery if the received power supply status information indicates that the computer (3) is powered by an internal power supply and that the detected charge level is below a preset value.

**15.** Mobile terminal (2) according to claim 14,
**characterized in,**
**that** the preset value is about 5% of the entire battery capacity.
